# EUROPEAN PATENT SPECIFICATION

(11) **EP 0 663 150 B1**
(45) Date of publication and mention of the grant of the patent: **06.10.1999**
(21) Application number: 94500004.0
(22) Date of filing: 13.01.1994
(51) Int. Cl.: A21C 3/06

(54) **Improvements introduced in machines for the continuous manufacturing of croissants**
Verbesserungen in einer Vorrichtung zur kontinuierlichen Herstellung von Hörnchen
Améliorations dans un appareil pour la production en continu de croissants

(43) Date of publication of application: 19.07.1995
(73) Proprietor: Lozano Soriano, Angel, E-08033 Barcelona (ES)
(72) Inventor: Lozano Soriano, Angel, E-08033 Barcelona (ES)
(74) Representative: Alonso Langle, Emilio

(56) References cited:
- DE-A- 3 903 746

## Description

The invention refers to a series of improvements introduced in machines for the continuous manufacturing of croissants so that from an extruded and rolled puff pastry, such puff pastry is cut in longitudinal bands from which the croissants will be obtained. On the other hand, the improvements consist of the cutting and positioning means of each piece of croissant and the means to expand such pieces of croissants for their later rolling and final bending of the ends of each croissant in order to be finally kept in freezers, for instance before proceeding to their final cooking.

### BACKGROUND OF THE INVENTION

The Spanish Utility Models 292.209, 89002389 and 9000128 and the Invention Patent 9201047, all of which belong to the applicant and inventor himself, refer to means related to the way of manufacturing croissants in order to obtain a maximum performance with the minimum intervention of the operator.

In this context, the Utility Model 292.209 presents a machine to roll and bend the ends of the croissant from the puff pastry already prepared.

The rolling and later bending of the croissant is probably one of the more tiring manual operations carried out in the field of artisan confectionery.

It has been proven that on the basis of a puff pastry already cut and prepared, a skilled and quick specialist is able to reach a maximum performance of 7 to 8 pieces per minute, i.e. around 500 pieces per hour. This way of operation is unbearable due to the muscle and mental fatigue since hands become stiff and the position affects the muscles and vertebrae of the back and the neck.

The artisan production cannot be carried out due to the fact that it is not cost-effective since performance is very limited and it proves to be necessary to look for other means of production and marketing.

In this context, apart from the Utility Model 292.209 mentioned above, the Spanish Utility Models 8902389 and 9000128 claim, on top of devices for the rolling and bending of the pieces to obtain the croissant, mechanical means to cut and shape the pieces of puff pastry from triangular-shaped pieces which emulate the artisan process.

As mentioned before, the Spanish Invention Patent 9201047 of the same applicant, finally offers a unit to manufacture croissants where the ends are bent thus automating all the operating process after having obtained the puff pastry reaching, in practice, a constant output capacity that exceed 2.500 pieces per hour, offering the same manufacturing and quality but avoiding the fatigue and eventual defects. Furthermore, it offers the additional advantage that four persons can be engaged in this task and systems such as transport and packaging can be improved so that the product can be put in the market at a better price.

In connection with the above state-of-the-art, US patent no. 37094644 could be mentioned, on the one hand, which describes a device to manufacture buns where a puff pastry band is conveyed through a lower conveyor belt and the end of the puff pastry is raised by means of the upper segment of an elevating device. Finally the puff pastry contacts an upper bank which runs forward and where it is rolled.

On the other hand, the US patent no. 4471263 describes a device and method where the croissants puff pastry pieces are fed between two conveyor belts running in opposite directions in order to roll the pieces.

In all documents mentioned above, the pieces are obtained, both in the Spanish patents and models and in the US Patent, from a single band of extruded and rolled puff pastry which is cut vertically according to the height of a triangle thus obtaining a croissant puff pastry from one single extruded band which is used to obtain the final product. Up to now, this concept has remained unaltered even considering the JP 285621/91 which is equivalent to the EP 91309808.3 and the DE 3903746 equivalent to the EP 9010204:0.

In the case of the documents mentioned above, the starting product is a single rolled and extruded puff pastry cut at a width which is a multiple of the width of a band where the height of the triangle is adjusted.

Once the puff pastry has been extended, the pieces are die-cut, then separated and finally directed towards the rolling stages.

In the previous state-of-the-art defined in the documents which do not belong to the applicant, no information on a fundamental operation can be observed. Such operation consist of extending the puff pastry, widening it and then to bend the ends forming a crescent so that it adopts the shape and texture of an artisan croissant.

Furthermore, in the documents filed before the EPO, the possibility of a side enlargement and an increase in output cannot be observed except the increase in the working speed with the problems that the fact to dangerously approach the butts when the machine is still in operation and the resistance capacity of the machine entail.

### DESCRIPTION OF THE INVENTION

The machine which is the object of this invention is based on means that represent a series of improvements to the systems already known and is able to simultaneously perform the manufacturing and shaping of croissants coming from different bands of extruded and rolled puff pastry thanks to a facility so that, with at least four operating units, such bands are able to achieve an output of 3,500 piece per unit, i.e. approximately 14,000 pieces per hour with only two operators. The final product is highly competitive in quality, similar to that obtained through artisan techniques, as well as in terms of performance and uniformity in the production always subject to outstanding safety and health conditions.

Specifically, the machine which is the object of the invention consists of a bench formed by a series of conveyor belts - four in the case of the example - and such belts are displaced longitudinally and receive other extruded and rolled puff pastry bands. Such bands have been previously separated and independently redirected towards the conveyor belts thus establishing above them and in first instance a cutting system that acts in an articulated manner, i.e. two blades act alternatively and obliquely in order to obtain pieces of isosceles triangle-shaped puff pastry. Apart from this cutting means, there are other positioning means for the pieces already cut and such positioning consists in locating each triangular piece at the vertex which corresponds to the smaller angle towards the direction opposite to conveyor belt travel.

In this front area there are means that carry out the partial cutting of the triangular piece itself perpendicularly to the base opposite to the vertex of the above mentioned angle.

After such cutting and positioning means of the triangular pieces thus obtained, there are also means to sprinkle flour to enable the following operation, i.e. the flouring of such triangular pieces and its subsequent conveyance to the so-called stretching area where there are belts operating at a higher speed and which, consequently, achieve the stretching of such pieces.

There are also means to widen the triangular pieces by widening or making an opening through the cutting of the base and a slight bending at the sides of the piece, which then goes through the relevant rolling device, after passing through the sprinkling elements and, if appropriate, through the selective means to fill the croissant.

The rolling process, as mentioned before, and after filling the croissant with the stuffing, either solid or pasty, or covering it with the appropriate stuff, is made through conventional means for instance, a rolling pad, which also bends its end. These means can be, for instance, a system of articulated arms already known within the industry.

Therefore, it should be highlighted that the invention is based on a basic fact, i.e., a puff pastry extruded by means of a rolling device, the working width of which can be increased to obtain two, three, four, five or more independent bands adapted to their relevant conveyor belts, from an operating point of view.

Furthermore, this new feature allows through the modification of the extruding nozzle and through the operation on the rolling mill to obtain one or more puff pastry bands by incorporating a new conveyor belt thus increasing the number of operating units without the need to increase the working speed of the machine with the advantages that this represents.

### DESCRIPTION OF THE DRAWINGS

To complement this description and in an effort to better understand the main characteristics of the invention, a set of drawings is attached to this descriptive report forming an integral part of it and where, as an illustration and without limitation, the following has been represented:
Figure 1 shows a plan view of the whole facility, constituting what could be considered a machine for the continuous manufacturing of croissants, incorporating the improvements which are the object matter of this invention, including the area for the separation and redirectioning of the four bands of rolled puff pastry to be introduced in the relevant conveyor belt.
Figure 2 shows a partial side view of the machine which incorporates the improvements which are the object of the invention.
Figure 3 shows a plan view of that part of the machine represented in the previous figure showing in detail the different elements and devices which incorporates the machine or facility.

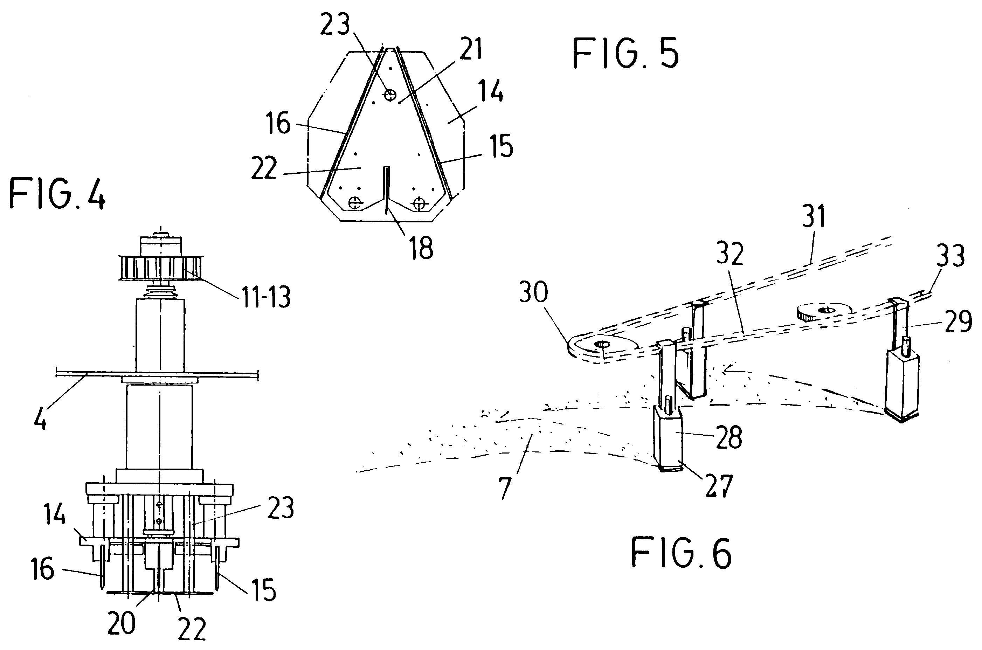

Figure 4 shows a detailed view of the cutting device incorporated into the machine which is the object of the invention and is represented in the previous figures.
Figure 5 shows a detailed plan view from below of the cutting device represented in the previous figure.
Figure 6 shows a detailed perspective view of the widening group.

### PREFERRED EXECUTION OF THE INVENTION

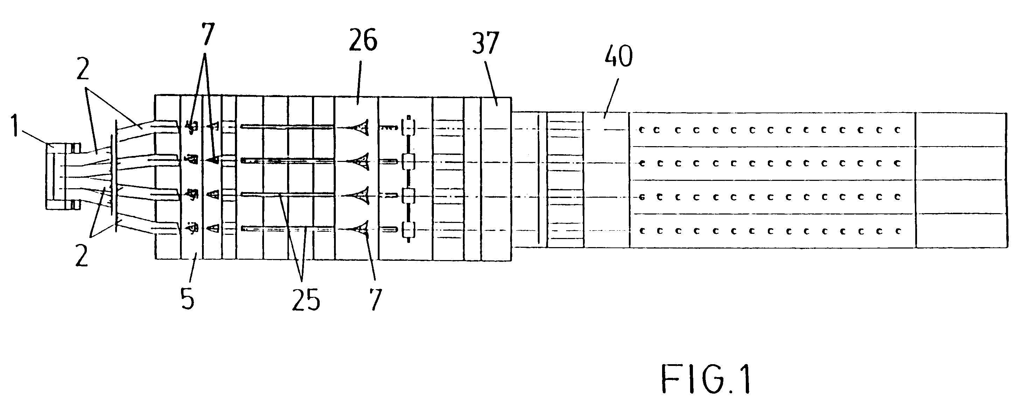

In the figures mentioned above and specifically in figure 1, it can be seen a rolling machine (1) which receives the puff pastry which has been previously extruded and rolled and where a series of longitudinal cuttings determining a series of bands (2) which are separated and redirectioned to be introduced into the machine or facility itself and placed on the relevant conveyor belts (3). At the access side of the puff pastry bands (2) of the facility there is a cutting system (5) formed by a carriage (4) which operates simultaneously in each one of the bands (2) making oblique cuttings (6) as will be explained below, to obtain isosceles triangular pieces (7) so that each one of such pieces (7) will finally constitute the croissant itself.

The width of the bands (2) will be equal to the height of the triangle corresponding to the perimeter of each piece (7).

The cutting system (5) is mounted, as mentioned before, on a carriage (4) which travels forward and backwards thanks to the actuation of an oscillating arm (8) or by any other conventional system so that such carriage (4) is directed towards the puff pastry band (2) which is conveyed by the endless band (3) positioning the relevant means so that they operate at the right time and in an accurate manner. For this purpose, the carriage (4) incorporates an engine controlled by a resolver with a numerical control system which combined with a microprocessor will perform a series of controlled movements as it will be described below.

The output shaft of such engine incorporates two twin pulleys (9) that by means of a series of belts (10) actuate another pair of pulleys (11) which also are double and coaxial which through the belts (12) enable the motion of the pulleys (3). All the pulleys and the belts are toothed so that the motion is achieved in an accurate and exact manner in steps of 90^{º} and continuous cycles controlled by the resolver and the relevant microprocessor.

The above-mentioned cutting system basically consists of a plate (14) which incorporates two blades (15) and (16) placed in an oblique position, i.e. convergent, and an axial blade (18) which makes a cutting (19) in the base of the triangle or puff pastry piece (7) so that such base where perpendicular cutting (19) is made is formed alternatively by a band edge (2) since the blades (15) and (16) diagonally cut such band (2). Since they operate alternatively, a fourth of a turn on one side is necessary to make the cutting and the advance to deposit the cut piece (7) on the conveyor belt (3) while it turns another fourth of a turn.

The blade plate (14) incorporates a series of pins (20) which - at the same time of the cutting - penetrate in the piece (7) so that when the plate (14) elevates, the pins, in turn, elevate the piece (7) so that it can be conveyed, fixed and finally placed again in the appropriate position on the relevant conveyor belt (3).

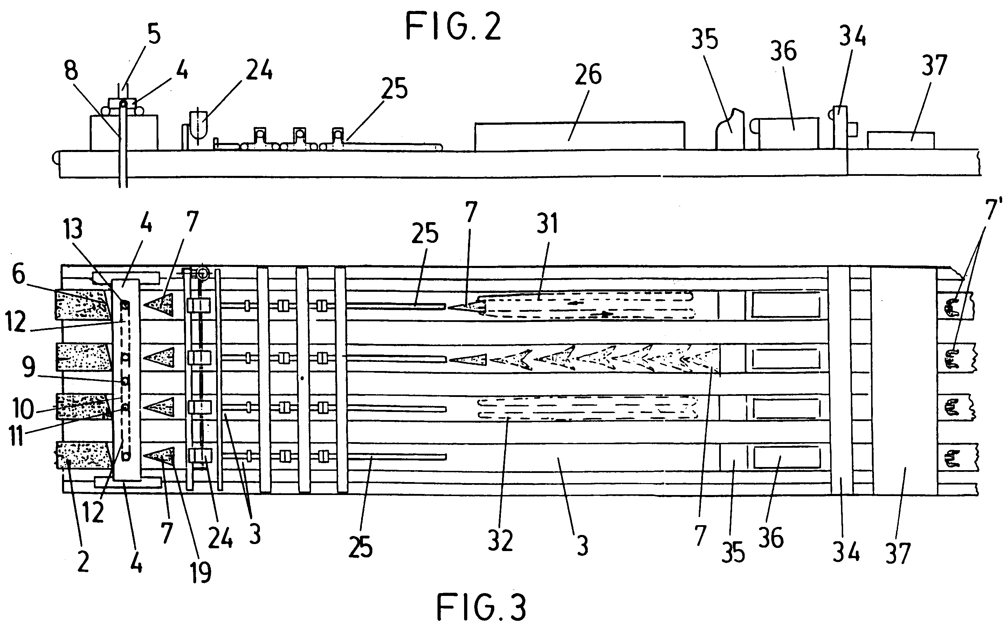

For this reason, the carriage (4) is displaced to reach the band (2) at the same time that the blade plate (14) is turning, alternatively cutting with the blade (15) or with the blade (16) since the cutting alternates. This way, the front edge (6) of the puff pastry bands (2), as shown in figure 3, will always offer an oblique profile so that with the alternate operation of any one of the blades, the intended isosceles triangle is obtained.

According to the resolver, the sequence of such movements will be from 0^{º} to 90^{º}, then from 90^{º} to 180^{º}, then from 180^{º} to 90^{º} and finally from 90^{º} to 0^{º}. This cycle is repeated indefinitely.

The pins (20) pierce a series of holes (21) located on an extracting plate (22) fixed by means of columns (23) which the plate (14) goes upwards and downwards pneumatically. This way, when the plate (14) goes downwards, it pushes the above-mentioned blades and pins surpassing the extracting plate (22) and actuating on the relevant puff pastry or piece (7).

On the contrary, the elevation of the device enables the turning and transportation of the puff pastry piece (7) and a back motion of the plate (14) with respect to the extracting plate (22), so that this latter will place the puff pastry piece (7) in the correct position on the conveyor belt (3) and it can be subject to the operation of the stretching section which will be described below.

Before the pieces (7) reach such stretching section, they should be floured by means of a device (24) located above and formed by flour sprinklers to carry out such operation and to enable the stretching and widening of the pieces (7).

The stretching device is formed by a series of endless belts (25) which advance at a speed faster than that of the conveyor belts (3), so achieving the stretching of the puff pastry pieces (7). The widening device (26) is placed after the stretching device and its task is to open the base of the triangular piece (7) at the cut (19) forming a V-shaped configuration as shown in figure 3.

The widening device is formed by a series of clips (27) mounted in housings (28) which connect them through bearings (29) to conveyor belts (30) the forward travel of which (31) runs or can run parallel to the edge of the conveyor belt (3) and the backwards travel presents a divergent tranche (32) and a tranche (33) parallel to the edge.

The housings (28) of the clips (27) incorporate a series of means to operate the clips so that they take the ends of the base of the triangle (7) and follow the piece (7) at the same conveying speed than that of the belt (3).

As shown in figure 3, the conveyor belts (30) reach during the forward travel (31) the shaping device (7). Then, the lower end of the clip (27), which is open, is placed underneath the triangular puff pastry just at each one of the vertices of the base since, as it can be noticed in the drawing, there is a device at each side enabling the simultaneous operations at both ends of the puff pastry.

The clips (29) are located on the belts (30) at regular intervals so that two clipping sets reach always simultaneously the vertices of the base of a triangular puff pastry piece (7) since they are always placed on the conveyor belt (3) at the same pace which is always constant and coinciding with that separating the clips (29).

There is a specific speed ratio between the speed of the belts (30) and the advance speed of the conveyor belts (3) so that once the ends of a puff pastry piece (7) are clipped, the forward motion is smooth and the stretching is only made vertically, slowly and progressively when the clip set (27) travels through the divergent tranche (32) reaching the complete widening when it arrives to the tranche (33).

The length of the divergent tranche (32) depends on the relative speeds to be developed. The longer it is, the slower will be the widening speed and the puff pastry will be stretched without cracks or breakings.

It is very important to emphasize the subject of the stretching of the puff pastry. Without such stretching it would not be possible to achieve the necessary reaction during the cooking to obtain the crunchy texture which characterizes the croissants. Up to now, all the operations carried out with automatic machines have resulted in croissants the puff pastry of which is not sufficiently kneaded and therefore the reactions of an artisan croissant are not achieved. Therefore, when describing the improvements which are the object of this invention the stretching operation of the puff pastry, in first instance, and the widening of the ends, afterwards, have been specifically highlighted.

The number of clips (27) depends on the travelling speed of the belt (3) in such a manner that a number of pieces (7) during its forward travel will be handled while the same number of empty clips will meet the puff pastry pieces (7) already stretched and to be widened.

Finally, the pieces (7) shaped as described above go through the rolling device thus obtaining the final shape of the croissant according to reference (7') of figure 3 which shows the rolling device (34) and the filling means (35) and the sprinklers (36) located between the widening area and the filling device (35). Furthermore, figure 3, and even figures 1 and 2, show how the means (37) to bend the ends and shape the crescent or final shape of the croissant (7') are located after the rolling device (34).

The synchronization and operation means need to perform the motion described for each operation to be carried out can be easily understood by any expert, form part of the current industry and can be solved in different ways. Therefore and since they are not relevant for the development of the invention they have not been neither described in the text nor represented in the drawings.

Finally, it is emphasized that to obtain - through mechanical automated means - a croissant with the same taste and shape than an artisan one, it is necessary to reproduce all the artisan operating stages and therefore the puff pastry needs to be stretched and the ends that form the crescent widened so that as they are thinner they will be cooked more rapidly and offer the same characteristic crunchy texture and taste as artisan croissants.

## Claims

1. IMPROVEMENTS INTRODUCED IN MACHINES FOR THE CONTINUOUS MANUFACTURING OF CROISSANTS, the object of which is to cut triangular pieces in puff pastry which has been previously extruded and rolled and, then, carry out the final sketching, bending and rolling of each piece to obtain the crescent shape which characterizes the croissants, characterized
by the fact that the prime stuff is extruded puff pastry cut and separated in several puff pastry bands, the number of which can vary depending on the extruding nozzle and the rolling mill feeding all or some of the conveyor belts independently,
by one or more conveyor belts (3) connected to a common frame whereby each conveyor has a cutting device (5) mounted on a carriage (4) for making oblique cuttings to obtain isosceles triangular pieces, consisting of two blades (15) and (16) arranged convergently and for alternatingly cutting and a third blade (18) in an axial position for making a partial cut perpendicular to the base of the triangular piece.
by having a set of twin pulleys (9) linked to the cutting device and operated by means of a resolver-controlled engine, where belts and pulleys are toothed to achieve accurate 90° steps in continuoos cycle controlled by the resolver and a microprocessor, by stretching means formed by endless belts (25) which advance faster than the conveyor belts (3), and
by widening means formed by a series of clips (27) mounted in housings supported by conveyor belts (30), the forward motion thereof being directed towards the triangular pieces of puff pastry (7) for opening the base at the partial cut.

2. IMPROVEMENTS INTRODUCED IN MACHINES FOR THE CONTINUOUS MANUFACTURING OF CROISSANTS according to claim 1, characterized by a plate (14) being adapted to perform, along with the carriage itself (4), the travelling and turning motions to make the cuttings alternatingly, and the conveyance and correct placement of the pieces on conveyor belts, the blade plate (14) being connected to a fixed plate (22) with holes (21) pierced by the pins (20) that operate on the pieces of pastry (7) during the up and down movements, elevating them and enabling the displacement and turning according with the movements of the relevant plate (14) and the carriage (4) with means for elevating the piece due to the pins (20) which penetrate in the piece (7), so that it can be conveyed, fixed and finally placed again in the appropiate position of the relevant conveyor belt (3).

3. IMPROVEMENTS INTRODUCED IN MACHINES FOR THE CONTINUOUS MANUFACTURING OF CROISSANTS according to claim 1 characterized in that the stretching means are formed in each case by pairs of clips (27), that reach the bases of the puff pastry pieces (7), each pair of clips (27) being located in a housing (28) connected through bearings (29) to conveyor belts (30) and the belt has a divergent inclined side deviation in a tranche which forces the puff pastry to widen due to the transversal displacement of the clip.

4. IMPROVEMENTS INTRODUCED IN MACHINES FOR THE CONTINUOUS MANUFACTURING OF CROISSANTS according to the claim 3, characterized in that the clips (27) are placed on the belt at regular intervals so that the two clips always reach simultaneously the vertice of the base of the triangular puff pastry(7) and that there is a specific speed ratio between the speed of the belts (30) and the advance speed of the conveyor belts (3), so, when the ends of the puff pastry (7) are clipped, the advance movement is smooth and the stretching occurs only vertically in a slow and progressive manner when the clips (27) advance through the divergent tranche (32) until they are fully widened when they reach the tranche (33).

## Patentansprüche

1. IN DEN MASCHINEN FÜR DIE KONTINUIERLICHE FERTIGUNG VON CROISSANTS EINGEFÜHRTE VERBESSERUNGEN, deren Aufgabe darin besteht, dreieckige Stücke aus Blätterteig zu schneiden, die vorher extrudiert und eingerollt wurden, und anschliessend das Strecken, das Zusammenlegen und das endgültige Einrollen jeden einzelnen Stücks vorzunehmen, um die halbmondförmige Gestalt zu erhalten, die die Croissants auszeichnet, gekennzeichnet durch die Tatsache, dass die Grundmasse aus extrudiertem, geschnittenem und in mehreren Teigbändern getrenntem Blätterteig besteht, wobei die Anzahl der Teigbänder vom Extrudermundstück und von der Aufwickelmühle abhängt, die alle oder einen Teil der Transportbänder unabhängig voneinander beschickt,
durch ein oder mehrere Transportbänder (3), die an einem gemeinsamen Rahmen angeschlossen sind, an dem jedes Transportband mit einer Schneidvorrichtung (5) ausgestattet ist, die auf einem Schlitten (4) montiert ist, um schräge Schnitte anzubringen und so gleichschenklige dreieckige Stücke zu erhalten, wobei die Schneidevorrichtung zwei Messer (15) und (16) aufweist, die konvergent angordnet sind und so, dass sie abwechselnd Schnitte anbringen, sowie ein drittes Messer (18) in axialer Position, um senkrecht zur Grundlinie des dreieckigen Stücks in Portionen zu teilen,
durch das Vorsehen einer Gesamtanordnung von doppelten Rollen (9), die mit der Schneidvorrichtung verbunden sind und über einen von einem Separator gesteuerten Mechanismus angetrieben werden, wobei die Riemen und die Rollen verzahnt sind, um genaue Stufen bei 90^{º} zu erhalten, gemäss einem kontinuierlichem Zyklus, der von dem Separator und von einem Mikroprozessor gesteuert wird,
durch Streckmittel, die aus endlosen Bändern (25) bestehen, welche sich schneller bewegen als die Transportbänder (3) und,
durch Ausweitungsmittel, die aus einer Reihe von Zangen (27) bestehen, die in einem von Transportbändern (30) getragenen Aufnahme montiert sind, wobei die Vorschubbewegung dieser Bänder auf die dreieckigen Stücke aus Blätterteig (7) gerichtet ist, um die Grundlinie durch einen teilweisen Schnitt zu öffnen.

2. IN DEN MASCHINEN FÜR DIE KONTINUIERLICHE FERTIGUNG VON CROISSANTS EINGEFÜHRTE VERBESSERUNGEN nach Anspruch 1, dadurch gekennzeichnet, dass eine Platte (14) vorgesehen ist, die so ausgeführt ist, dass sie zusammen mit dem Schlitten (4) die Verschiebungs- und Drehbewegungen ausführt, um so die Schnitte abwechselnd anzubringen, sowie den richtigen Zuschnitt und Positionierung der Stücke auf den Transportbändern, wobei die Platte (14) des Messers mit einer festen, mit Löchern (21) ausgestatteten Platte (22) verbunden ist, die von Bolzen (20) durchquert wird, die während der Auf- und Abwärtsbewegungen auf die Teigstücke (7) einwirken, indem sie diese nach oben bewegen und die Verschiebung und Drehung gemäss der Bewegungen der entsprechenden Platte (14) und des Schlittens (4) ermöglichen, mit Mitteln, um das Stück kraft der Bolzen (20) nach oben zu bewegen, die in das Stück (7) eindringen, so dass dieses transportiert, befestigt und schliesslich von neuem in die geeignete Position auf dem entsprechenden Transportband (3) gebracht werden kann.

3. IN DEN MASCHINEN FÜR DIE KONTINUIERLICHE FERTIGUNG VON CROISSANTS EINGEFÜHRTE VERBESSERUNGEN nach Anpruch 1, dadurch gekennzeichnet, dass die Streckmittel jeweils aus Zangenpaaren (27) bestehen, die bis zu den Grundlinien der Teile (7) aus Blätterteig gehen, wobei jedes Zangenpaar (27) in einer Aufnahme (28) angeordnet ist, die über Lager (29) mit den Transportbändern (30) verbunden ist, wobei das Band auf einem Abschnitt, der das Produkt aus Blätterteig dazu bringt, sich aufgrund der Querverschiebung der Zange zu verbreitern, eine seitliche divergente schräge Abweichung aufweist.

4. IN DEN MASCHINEN FÜR DIE KONTINUIERLICHE FERTIGUNG VON CROISSANTS EINGEFÜHRTE VERBESSERUNGEN nach Anspruch 3, dadurch gekennzeichnet, dass die Zangen (27) in regelmässigen Abständen auf dem Band angeordnet werden, so dass die beiden Zangen immer gleichzeitig bis zum Scheitelpunkt der Grundlinie des dreieckigen Produkts aus Blätterteig (7) kommen, und dadurch, dass ein spezifisches Geschwindigkeitsverhältnis zwischen der Geschwindigkeit der Bänder (30) und der Vorschubgeschwindigkeit der Transportbänder (3) besteht, so dass bei dem Ergreifen der Enden des Produkts aus Blätterteig dis Vorschubbewegung sanft ist und die Streckung nur langsam und fortschreitend in die senkrechte Richtung stattfindet, wenn sich die Zangen (27) über den divergenten Abschnitt (32) nach vorne bewegen, bis sie vollständig gestreckt sind, wenn sie den Abschnitt (33) erreichen.

## Revendications

1. PERFECTIONNEMENTS INTRODUITS AUX MACHINES POUR LA FABRICATION EN CONTINU DE CROISSANTS, dont l'objet consiste à couper des pièces triangulaires de pâte feuilletée qui ont été préalablement extraites et enroulées, et à réaliser, à la suite, l'étalement, le pliage et l'enroulement final de chaque pièce pour obtenir la forme d'une demi-lune qui caractérise les croissants, qui est caractérisée en ce que la substance de base est de la pâte feuilleté extrudée, coupée et séparée en divers bandes de pâte, dont le nombre peut varier en dépendant de la buse d'extrusion et du moulín à enroulement qui alimente toutes ou une partie des bandes transporteuses d'une manière indépendante,
en ce qu' une ou plusieurs bandes (3) transporteuses connectées à un bâti commun, où chaque transporteur est équipé d'un dispositif (5) de découpage monté sur un charriot (4) pour faire des coupes obliques afin d'obtenir des pièces triangulaires isocèles, consistant à deux lames (15) et (16) disposées de façon convergente et pour la coupe alternative, et à une troisième lame (18) en position axiale pour réaliser la coupe en portions, perpendiculaire à la base, de la pièce triangulaire,
par le fait d'avoir un ensemble de poulies doubles (9) liées au dispositif de découpage et actionnées au moyen d'un engin contrôlé par un séparateur, où les courroies et les poulies sont dentées pour obtenir des échelons précis à 90° selon un cycle continu contrôlé par le séparateur et par un microprocesseur,
par des moyens étaleurs formés par des rubans sans fin (25) qui avancent plus rapidement que les bandes (3) transporteuses, et
par des moyens d'élargissement formés par une série de pinces (27) montées dans le logement supporté par des bandes (30) transporteuses, le mouvement étant dírigé vers l'avance des celles-ci vers les pièces triangulaires de pâte feuilletée (7) pour ouvrir la base au moyen de la coupe partielle.

2. PERFECTIONNEMENTS INTRODUITS AUX MACHINES POUR LA FABRICATION EN CONTINU DE CROISSANTS selon la revendication 1, caractérisée par une plaque (14) adaptée pour réaliser avec le charriot (4) les mouvements de déplacement et de rotation afin de faire les coupes de manière alternative, et la coupe et le positionnement correct des pièces sur les bandes transporteuses, la plaque (14) à lames étant connectée à une plaque (22) fixe munie d'orifices (21) perforés par des boulons (20) opérant sur les pièces (7) de pâte pendant les mouvements de montée et de descente, en les élevant et en permettant le déplacement et la rotation selon les mouvement de la plaque (14) adéquate et du charriots (4) par des moyens pour élever la pièce au moyen des boulons (20) pénétrant dans la pièce (7), de telle manière que celle-ci puisse être transportée, fixée et finalement déposée à nouveau à la position appropriée sur la bande (4) transporteuse adéquate.

3. PERFECTIONNEMENTS INTRODUITS AUX MACHINES POUR LA FABRICATION EN CONTINU DE CROISSANTS, selon la revendication 1, caractérisée en ce que les moyens étaleurs sont formés, à chaque cas, par des paires de pinces (27) atteignant les bases des pièces (7) de pâte feuilletée, chaque paire de pinces étant située dans un logement (28) connecté à travers des roulements (29) aux bandes (30) transporteuses, et la bande ayant une déviation latérale inclinée divergente dans un tronçon qui oblige le produit de pâte feuilletée à s'élargir, étant donné le déplacement transversal de la pince.

4. PERFECTIONNEMENTS INTRODUITS AUX MACHINES POUR LA FABRICATION EN CONTINU DE CROISSANTS, selon la revendication 3, caractérisée en ce que les pinces (27) sont placées sur la bande à des intervalles réguliers afin que les deux pinces atteignent toujours simultanément, le sommet de la base du produit de pâte feuilletée (7) et triangulaire, et en ce qu'il existe un rapport spécifique de vitesse entre la vitesse des bandes (30) et la vitesse d'avance des bandes (3) transporteuses, afin que, lorsque les extrémités du produits de pâte feuilletée sont saisies, le mouvement d'avance est doux et l'étalement n'a lieu que verticalement, lentement et progressivement lorsque les pinces (27) avancent à travers le tronçon (32) divergent jusqu'à ce que celles-ci ont été étalées complètement une fois atteint le tronçon (33).
